(19)

Europäisches Patentamt

European Patent Office

Office européen des brevets

(11) **EP 4 640 875 A1**

(12) **EUROPEAN PATENT APPLICATION**
published in accordance with Art. 153(4) EPC

(43) Date of publication:
**29.10.2025  Bulletin 2025/44**

(21) Application number: 23907464.4

(22) Date of filing: **24.11.2023**

(51) International Patent Classification (IPC):
*C22C 38/02* (2006.01)    *C22C 38/04* (2006.01)
*C22C 38/06* (2006.01)    *C22C 38/00* (2006.01)
*C22C 38/14* (2006.01)    *C22C 38/34* (2006.01)
*C22C 38/38* (2006.01)    *C21D 8/12* (2006.01)

(52) Cooperative Patent Classification (CPC):
**C21D 8/12; C21D 9/46; C22C 38/00; C22C 38/02; C22C 38/04; C22C 38/06; C22C 38/14; C22C 38/34; C22C 38/38; C23G 1/08; H01F 1/147**

(86) International application number:
**PCT/KR2023/019137**

(87) International publication number:
**WO 2024/136178 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **21.12.2022  KR 20220181161**

(71) Applicant: POSCO Co., Ltd
**Pohang-si, Gyeongsangbuk-do 37859 (KR)**

(72) Inventors:
• **PARK, June-Soo**
  **Pohang-si, Gyeongsangbuk-do 37877 (KR)**

• **HONG, Jae-Wan**
  **Gwangyang-si, Jeollanam-do 57807 (KR)**
• **SONG, Dae-Hyun**
  **Pohang-si, Gyeongsangbuk-do 37877 (KR)**

(74) Representative: **Meissner Bolte Partnerschaft mbB**
  **Patentanwälte Rechtsanwälte**
  **Postfach 86 06 24**
  **81633 München (DE)**

Remarks:
A request for correction of the translation has been filed pursuant to Rule 139 EPC. A decision on the request will be taken during the proceedings before the examining division (Guidelines for Examination in the EPO, A-V, 3).

(54)   **NON-ORIENTED ELECTRICAL STEEL SHEET AND METHOD FOR MANUFACTURING SAME**

(57)    Provided are a non-oriented electrical steel sheet and a method for manufacturing same. The electrical steel sheet according to the present invention comprises at most 0.005 wt% of C, 2.50-4.50 wt% of Si, 0.10-2.50 wt% of Mn, 0.002-0.020 wt% of P, 0.0010-0.0050 wt% of S, 0.50-2.50 wt% of Al, at most 0.0050 wt% of N, and at most 0.0050 wt% of Ti, with the balance being Fe and inevitable impurities, wherein Al, Si, and Mn satisfy predefined relational equation 1, and the distribution of precipitates in the microstructure of the steel sheet satisfies relational equation 3.

**EP 4 640 875 A1**

**Description**

Technical Field

The present disclosure relates to a method for manufacturing a non-oriented electrical steel sheet, which may be mainly used as a material for an iron core for a rotating machine such as a motor, a generator, or the like, and a material for an iron core for a stationary machine such as a small transformer or the like, and more specifically, to a non-oriented electrical steel sheet having excellent high-frequency iron loss that may be manufactured by optimally controlling components of steel and optimizing manufacturing conditions to appropriately control distribution of precipitates.

Background Art

Recently, with the strengthening of environmentally friendly policies worldwide, demand for improved efficiency of motors or generators, which may be energy conversion devices converting electrical energy into mechanical energy or mechanical energy into electrical energy, is increasing. Since non-oriented electrical steel sheets may be materials to be used as a material for an iron core, in a rotating machine such as a motor, a generator, or the like, and a stationary machine such as a small transformer or the like, to have a significant effect on efficiency, demand for improved efficiency of the motor or the generator is leading to demand for improved characteristics of the non-oriented electrical steel sheets.

Representative magnetic characteristics of non-oriented electrical steel sheets may be iron loss and magnetic flux density. As iron loss decreases, iron loss to occur during a process of magnetizing an iron core may be reduced to improve efficiency. As magnetic flux density increases, a higher magnetic field may be induced with the same energy, and since less current is applied to obtain the same magnetic flux density, energy efficiency may be improved. Meanwhile, recently, in terms of iron loss, high-frequency iron loss has emerged as a more important characteristic than commercial frequency (50Hz) iron loss. As a rotation speed of the motor increases, high-frequency iron loss may have a greater effect on efficiency than commercial frequency iron loss. Therefore, as a representative example, in non-oriented electrical steel sheets used in driving motors for eco-friendly vehicles or the like, high-frequency iron loss of 400Hz may be evaluated as a more important characteristic. Therefore, when the recent energy efficiency improvement policy and the utilization direction of non-oriented electrical steel sheets are reflected, it may be said that the development technology of non-oriented electrical steel sheets with low high-frequency iron loss, high magnetic flux density, and excellent magnetism is essential.

As the most basic and effective method of reducing iron loss among important characteristics of non-oriented electrical steel sheets, there may be a method of increasing addition amounts of Si, Al, and Mn, which may be elements with high resistivity, or a method of decreasing a thickness of a steel sheet. An increase in addition amounts of Si, Al, and Mn may increase resistivity of steel, which reduces eddy current loss among iron loss of the non-oriented electrical steel sheets, to have an effect of reducing iron loss, and, in high-frequency iron loss, may thus be a very effective method for reducing high-frequency iron loss, since a proportion of eddy current loss among the iron loss may increase. However, since the effect may be changed depending on an addition ratio, and the magnetic flux density may deteriorate as amounts of alloying element increases, in order to secure excellent iron loss and magnetic flux density, an appropriate addition amount, and an addition ratio between addition amounts of Si, Al, and Mn should be appropriately controlled. The method of decreasing a thickness of the steel sheet may be also a method of greatly reducing the eddy current loss thereof, and may be very effective in reducing iron loss, but may have disadvantages of low productivity and workability for the steel sheet with a thin thickness. However, from a recent energy efficiency perspective, the need for more thin products is increasing, and it may be expected that product development will continue in a direction of decreasing a thickness in the future.

Technologies for improving magnetic properties by utilizing special additive elements such as REM or the like to improve a texture, or of introducing additional manufacturing processes such as warm rolling, double rolling, double annealing, or the like, as a method of improving magnetic flux density while lowering iron loss of non-oriented electrical steel sheets, may be also be reported. However, since all of these technologies may lead to an increase in manufacturing raw material costs or may be difficult to mass-produce, it may be said that development of technologies that may be both excellent in magnetism and easy to produce commercially is necessary. In addition, technologies are being developed to suppress and control formation of inclusions by strictly limiting amounts of impurities added and adding elements such as Ca or the like, but may also lead to an increase in manufacturing raw material costs and may not be easy to clearly secure effects thereof.

There have been continuous efforts to solve these problems, and many technologies have been developed. Among the prior art technologies for non-oriented electrical steel sheets, Patent Document 1 proposes a method for improving magnetism through improvement of a texture by setting a composition weight ratio of MnO and $SiO_2$ ($MnO/SiO_2$) in oxide inclusions in steel to 0.43 or less, performing finish rolling during hot-rolling in a ferrite single-phase region in which a friction coefficient between the steel and a roll is 0.2 or less and a finish rolling temperature is 700°C or higher, and then performing hot-rolled sheet annealing, cold-rolling, and cold-rolled sheet annealing. In this case, since a thickness of the hot-rolled sheet should be controlled to 1.0mm or less, productivity may decrease, making commercial production difficult.

Patent Document 2 proposes a method for controlling a heating speed in final-annealing to 50°C/s or more, in order to secure excellent magnetism by improving a texture of non-oriented electrical steel sheets, but does not take into account the fact that even if a texture is improved by performing rapid heating, magnetism is inferior due to a microstructure becoming uneven.

In addition, Patent Document 3 performed a process of performing skin pass rolling with a reduction ratio of 3 to 10%, and performing annealing again, in addition to processes of hot-rolling, hot-rolled sheet annealing, cold-rolling, and cold-rolled sheet annealing, in order to manufacture non-oriented electrical steel sheets with excellent magnetic properties in rolling direction, but also has a problem of increased raw material costs due to an additional process.

Patent Document 4 suggested a method for obtaining a steel sheet with low iron loss by reducing specific impurity elements contained in steel to a very low level and securing ease of grain growth by adding a skin pass process, but there may be a disadvantage in terms of an increase in raw material costs due to extremely low impurity management.

Patent Document 5 suggested a technology for achieving excellent iron loss by suppressing precipitation of MnS by adding rare earth elements such as Ca, Mg, REM, or the like such that grains are small before stress removal but grow during annealing for stress removal. However, this also has disadvantages of increasing manufacturing raw material costs for adding and controlling additional elements, and making it difficult to secure effects thereof when annealing for stress removal is not performed.

[Prior art literature]

[Patent Documents]

(Patent Document 1) Japanese Patent Publication No. 2009-102739
(Patent Document 2) Japanese Patent Publication No. 2016-199787
(Patent Document 3) Japanese Patent Publication No. 2006-265720
(Patent Document 4) Japanese Patent Publication No. 2008-050686
(Patent Document 5) Korean Patent Publication No. 2001-0100866

Summary of Invention

Technical Problem

The purpose of the present disclosure is to provide a non-oriented electrical steel sheet having excellent magnetism by strictly controlling composition components of steel and appropriately controlling a heat treatment time at a soaking temperature and a heating rate and a cooling speed during a hot-rolled sheet annealing process according to a component amount, to coarsely control precipitates in steel.

In addition, the technical problems to be achieved in the present disclosure are not limited to the technical problems mentioned above, and other technical problems not mentioned can be clearly understood by a person having ordinary knowledge in the technical field to which the present disclosure belongs from the description below.

Solution to Problem

Therefore, an aspect of the present disclosure relates to a non-oriented electrical steel sheet including:

by weight, C: 0.005% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, a balance of Fe, and inevitable impurities, wherein Al, Si, and Mn satisfy the following Relationship 1, and a microstructure of the steel sheet exhibits precipitation distribution satisfying the following Relationship 3:

$$[\text{Relationship 1}]$$

$$0.60 \leq ([\text{Al}]+[\text{Mn}])/[\text{Si}] \leq 1.0$$

Where [Al], [Mn], and [Si] are addition amounts (wt%) of Al, Mn, and Si, respectively.

Ratio of Number of Sulfides and Nitrides having a size of 0.2 $\mu$m or more among Precipitates having a size of 0 to 0.5 $\mu$m in Microstructure of Steel $\geq$ 10%  [Relationship 3]

The microstructure of the steel sheet may satisfy the following Relationship 4:

Number of Nitrides of 0.5 $\mu$m or more in Microstructure of Steel $\geq$ 100/mm$^2$  [Relationship 4]

The non-oriented electrical steel sheet has a resistivity ($\rho$) of 63 $\mu\Omega$cm or higher at room temperature.
In the non-oriented electrical steel sheet, iron loss (W10/400) may be 12.0 W/Kg or less and magnetic flux density (B50) may be 1.60 T or more.
In this case, the iron loss W10/40 is an average loss (W/Kg) in a rolling direction and a direction, perpendicular to the rolling direction, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.
The non-oriented electrical steel sheet may further include one or more of Sn and Sb in a range of 0.2% or less.
The non-oriented electrical steel sheet may further include one or more of Cu and Ni in a range of 0.05% or less.
The non-oriented electrical steel sheet may further include Cr in a range of 0.1% or less.
The non-oriented electrical steel sheet may further include one or more of Zr, Mo, and V in a range of 0.01% or less.
In addition, another aspect of the present disclosure relates to a method for manufacturing a non-oriented electrical steel sheet, including:

reheating a slab containing, by weight, C: 0.005% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, a balance of Fe, and inevitable impurities, hot-rolling the reheated slab to manufacture a hot-rolled steel sheet; cold-rolling and then annealing the hot-rolled steel sheet, or annealing the hot-rolled steel sheet without cold-rolling; pickling and then air-cooling the annealed hot-rolled steel sheet; and cold-rolling the air-cooled hot-rolled steel sheet; and final-annealing the cold-rolled steel sheet,
wherein Al, Si, and Mn satisfy the following Relationship 1,
during the hot-rolled sheet annealing process, a soaking temperature is controlled to be within a range of 850 to 1100°C, a soaking time is controlled to be within a range of 30 to 300 seconds, and a heating rate (HR, °C/s) from 600°C to a soaking zone temperature during the heating and a cooling rate (CR, °C/s) after the soaking to 600°C are controlled to satisfy the following Relationship 2:

$$[\text{Relationship 1}]$$

$$0.60 \leq ([\text{Al}]+[\text{Mn}])/[\text{Si}] \leq 1.00$$

Where [Al], [Mn], and [Si] are addition amounts (wt%) of Al, Mn, and Si, respectively.

$$[\text{Relationship 2}]$$

$$1.0 \leq (\text{HR}+\text{CR})/1000\{([\text{Al}]+[\text{Mn}])*([\text{N}]+[\text{S}])\} \leq 10.0$$

Where [Al], [Mn], [N], and [S] are addition amounts (wt%) of Al, Mn, N, and S, respectively.
The final-annealed electrical steel sheet may exhibit precipitation distribution satisfying Relationships 3 and 4 in a microstructure of the steel sheet, and may have a resistivity ($\rho$) of 63 $\mu\Omega$cm or higher at room temperature, iron loss (W10/400) of 12.0 W/Kg or less after the final-annealing, and a magnetic flux density (B50) of 1.60 T or more:

Ratio of Number of Sulfides and Nitrides having a size of 0.2 $\mu$m or more among Precipitates having a size of 0 to 0.5 $\mu$m in Microstructure of Steel $\geq$ 10%  [Relationship 3]

Number of Nitrides of 0.5 μm or more in Microstructure of Steel ≥ 100/mm²                    [Relationship 4]

Advantageous Effects of Invention

According to the present disclosure, by controlling composition components of steel and appropriately controlling a heat treatment time at a soaking temperature, and a temperature elevation rate and a cooling speed during a hot-rolled sheet annealing process according to a component amount, to coarsely control precipitates in steel, thereby effectively providing a non-oriented electrical steel sheet having excellent magnetism with a resistivity (ρ) of 63 μΩcm or higher at room temperature, iron loss (W10/400) of 12.0 W/Kg or less after final-annealing, and a magnetic flux density (B50) of 1.60 T or more.

Best Mode for Invention

Hereinafter, the present disclosure will be described.

The present disclosure proposes a method for manufacturing a non-oriented electrical steel sheet, in which essential components, Si, Mn, and Al, in which amounts thereof to be added are 2.5 to 4.5%, 0.1 to 2.5%, and 0.5 to 2.5%, respectively, are added in a composition system of an existing non-oriented electrical steel sheet, and a composition system in which Al, Mn, and Si satisfy Relationship 1 of 0.60 ≤ ([Al]+[Mn])/[Si] ≤ 1.00.

In addition, in the present disclosure, when a non-oriented electrical steel sheet is manufactured with a slab of the composition system, usual hot-rolling, hot-rolled sheet annealing, cold-rolling, and cold-rolled sheet annealing may be performed, and during the hot-rolled sheet annealing process, a soaking heat treatment time may be 30 seconds or more, and a heating rate (HR,°C/s) from 600°C to a soaking zone temperature during the heating and a cooling rate (CR,°C/s) after the soaking to 600°C may be appropriately controlled by the following Relationship 2, to coarsen distribution of precipitates in a microstructure of the steel sheet.

```
[Relationship 2]

1.0 ≤ (HR+CR)/1000{([Al]+[Mn])*([N]+[S])} ≤ 10.0
```

To explain in detail, important elements of which addition amounts and contents should be controlled in the present disclosure may be Si, Al, Mn, and N, S. The most efficient manner for reducing iron loss may be to increase resistivity of steel by adding Si, Al, and Mn. In particular, in a high-frequency region, effects of increasing a proportion of eddy current loss, in the iron loss, increases more, and increasing resistivity may increase. However, as addition amounts of Si, Al, and Mn increases, the iron loss may decrease, but saturation magnetic flux density may decrease to deteriorate magnetic flux density, and brittleness of a material may increase to lead to poor cold-rolling properties and lower productivity. Therefore, to secure characteristics of low iron loss and high magnetic flux density while also securing productivity, it is necessary to control the addition amounts of Si, Al, and Mn, as well as to appropriately combine an addition ratio of each of the elements, and thus Relationship 1 may be proposed.

Meanwhile, Al and Mn may be well known as elements forming nitrides and sulfides by combining with N and S. When precipitates exist in the steel, non-oriented electrical steel sheets may inhibit grain growth and increase hysteresis loss, which leads to poor magnetism. Therefore, when amounts of Al and Mn to be added increase, N and S should be controlled more actively, and magnetic deterioration should be suppressed to the minimum by forming nitrides and sulfides more coarsely. To this end, it is necessary to strictly control conditions in the hot-rolled sheet annealing process, which may be a very important process for the formation and distribution of precipitates, as well as the component control. In this respect, the present disclosure proposes Relationship 2.

From this point of view, a non-oriented electrical steel sheet of the present disclosure obtained may include, by weight, C: 0.005% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, a balance of Fe, and inevitable impurities, wherein Al, Si, and Mn satisfy the following Relationship 1, and a microstructure of the steel sheet exhibits precipitation distribution satisfying the following Relationship 3. The electrical steel sheet of the present disclosure may exhibit excellent high-frequency iron loss and magnetic flux density, with a resistivity (ρ) of 63 μΩcm or higher at room temperature, iron loss (W10/400) of 12.0 W/Kg or less, and a magnetic flux density (B50) of 1.60 T or more.

```
[Relationship 1]

0.60 ≤ ([Al]+[Mn])/[Si] ≤ 1.0
```

Where [Al], [Mn], and [Si] are addition amounts (wt%) of Al, Mn, and Si, respectively.

Ratio of Number of Sulfides and Nitrides having a size of 0.2 $\mu$m or more among Precipitates having a size of 0 to 0.5 $\mu$m in Microstructure of Steel $\geq$ 10%                    [Relationship 3]

Hereinafter, composition and content restrictions of the electrical steel sheet of the present disclosure will be described, and "%" herein means wt%.

Si: 2.50 to 4.50% or less

Si may be a major element added to increase resistivity of steel and reduce eddy current loss in iron loss, and to secure low iron loss characteristics, especially low iron loss in a high-frequency region, it should be added by 2.50% or more. As the amount added increases, magnetic flux density may decrease significantly and rollability may deteriorate due to an increase in brittleness. Therefore, an amount to be added is limited to 4.50% or less. More preferably, it is limited to a range of 3.00 to 4.00%.

Mn: 0.10 to 2.50% or less

Mn may be an element that increases resistivity and lowers iron loss along with Si, Al, or the like, and may be also an element that improves a texture. However, when an amount to be added is too small, fine sulfides may be formed, and when an amount to be added is excessive, magnetic flux density may decrease significantly. Therefore, an amount to be added is limited to 0.10 to 2.50%. More preferably, it is limited to a range of 0.50 to 2.00%.

Al: 0.50 to 2.50%

Al may be an element that may be added because it plays an important role in reducing iron loss by increasing resistivity together with Si, and also reduces magnetic anisotropy to reduce magnetic deviation in a rolling direction and a direction, perpendicular to the rolling. However, when an amount to be added is small, an effect of reducing iron loss may not be significant, and when an amount to be added is too large, magnetic flux density may be greatly inferior. Therefore, an amount to be added is limited to 0.50 to 2.50%. More preferably, it is limited to a range of 0.60 to 2.00%.

C: 0.0050% or less

C may combine with Ti, Nb, or the like to form carbides, thereby inferior to magnetism, and when processed into an electrical product in a final product and used, iron loss may increase due to magnetic aging, which reduces efficiency of an electrical device. Therefore, an amount to be added is limited to 0.0050% or less.

S: 0.0010 to 0.0050%

S may be an element that forms sulfides such as MnS, CuS, (Cu,Mn)S, or the like, which may be harmful to magnetic properties, so it may be desirable to add as little as possible. However, when it is added less than 0.0010%, it may be rather disadvantageous for formation of textures, and formation of fine sulfides may be promoted, which reduces magnetism, so it may be recommended to contain 0.0010% or more, and when it is added above 0.0050%, magnetism may be deteriorated due to an increase in sulfide, so it may be recommended to contain 0.0010 to 0.0050%.

N: 0.0050% or less

N may be an element that may be harmful to magnetism, such as forming nitrides by strongly combining with Al, Ti, Nb, or the like to inhibit grain growth, so it may be desirable to contain less, and in the present disclosure, it is limited to 0.0050% or less.

Ti: 0.0050% or less

Ti may form fine carbides and nitrides by combining with C and N, thereby inhibiting grain growth and lowering magnetic flux density. The more it is added, a texture may be deteriorated due to increases in carbides and nitrides, which worsens magnetism. Therefore, in the present disclosure, it is limited to 0.0050% or less.

P: 0.002 to 0.020%

P may be a grain boundary and surface segregation element that has the effect of improving the texture of steel. However, when an amount to be added is less than 0.002%, an effect thereof may be minimal, and when it is added in excess of 0.020%, it inhibits grain growth, thereby lowering iron loss and lowering rolling properties due to grain boundary segregation, which also reduces productivity. Therefore, an amount to be added should be controlled to 0.002 to 0.020%. More preferably, it is limited to 0.003 to 0.010%.

In addition to the elements, Sn or Sb generally known as elements that improve a texture may also be added for additional magnetic improvement. However, when an amount to be added is too large, it inhibits grain growth and deteriorates magnetism, so in the present disclosure, one or more of Sn and Sb may be additionally included in a range of 0.2% or less.

In addition, in Cu or Ni, although this may be added for reasons such as improving magnetism, this may react with impurity elements to form fine sulfides, carbides, and nitrides, which may have a detrimental effect on magnetism, so in the present disclosure, Cu and Ni may be additionally included alone or in a combination of two types in a range of 0.05% or less.

In Cr, it may be similar to Cu and Ni, but it has an effect of improving magnetism by increasing resistivity, so it may be added in a range of 0.1% or less.

In addition, since Zr, Mo, V, or the like may be a strong carbonitride-forming element, it may not be to be added as possible, and in the present disclosure, Zr, Mo, and V may be included alone or in a combination of two or more types in a range of 0.01% or less.

In addition to the composition, the remainder may be composed of Fe and other inevitable impurities.

Meanwhile, in the present disclosure, Si, Al, and Mn may be added in amounts of Si: 2.50 to 4.50%, Mn: 0.10 to 2.50%, and Al: 0.50 to 2.50%, and it is necessary for the Al, Mn, and Si to satisfy the following Relationship 1, and the specific reasons for this may be as follows.

```
[Relationship 1]
```

$$0.60 \leq ([Al]+[Mn])/[Si] \leq 1.00$$

Where [Al], [Mn], and [Si] are addition amounts (wt%) of Al, Mn, and Si, respectively.

The iron loss of the non-oriented electrical steel may be divided into hysteresis loss and eddy current loss, and elements such as Si, Al, Mn, and the like may be added to increase resistivity of steel, which may significantly reduce the eddy current loss. In particular, as a frequency increases, a proportion of total iron loss occupied by the eddy current loss may increase, so it is necessary to control the resistivity of the steel to a certain level or higher in order to obtain excellent high-frequency iron loss. Through the present disclosure, it was confirmed that excellent characteristics may be secured when a resistivity ($\rho$) of the steel is 63 $\mu\Omega$cm or higher. Among Si, Al, and Mn, Si may be an element that increases the resistivity of the steel the most, but an increase in amount of Si added may increase brittleness of the steel, which reduces productivity. Therefore, to secure productivity while making resistivity of the steel 63 $\mu\Omega$cm or higher, an appropriate amount of Al and Mn should be added along with Si, and as a result of examining an appropriate addition ratio, Relationship 1 was derived. It may be known that Al has a greater effect of increasing the resistivity of the steel than Mn, but Al does not have to be added in a particularly larger amount than Mn.

In addition, an electrical steel sheet of the present disclosure may exhibit precipitation distribution satisfying the following Relationship 3 in the microstructure of the steel sheet.

Ratio of Number of Sulfides and Nitrides having a size of 0.2 $\mu$m or more among Precipitates of 0 to 0.5 $\mu$m in Microstructure of Steel $\geq$ 10%                    [Relationship 3]

More preferably, the microstructure of the steel may satisfy the following Relationship 4.

Number of Nitrides of 0.5 $\mu$m or more in Microstructure of Steel $\geq$ 100/mm$^2$                    [Relationship 4]

An electrical steel sheet of the present disclosure exhibiting such precipitation distribution may have a resistivity ($\rho$) of 63 $\mu\Omega$cm or higher at room temperature.

In addition, iron loss (W10/400) may be 12.0 W/Kg or less, and magnetic flux density (B50) may be 1.60 Tor more. In this case, the iron loss W10/40 may be average loss (W/Kg) in a rolling direction and a direction, perpendicular to the rolling, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.

Next, a method for manufacturing a non-oriented electrical steel sheet according to an embodiment of the present disclosure will be described in detail.

The present disclosure relates to a method for manufacturing a non-oriented electrical steel sheet, including reheating a slab containing, by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities; hot-rolling the reheated slab to manufacture a hot-rolled steel sheet; cold-rolling and then annealing the hot-rolled steel sheet, or annealing the hot-rolled steel sheet without cold-rolling; pickling and then air-cooling the annealed hot-rolled steel sheet; and cold-rolling the air-cooled hot-rolled steel sheet; and final-annealing the cold-rolled steel sheet, wherein Al, Si, and Mn satisfy Relationship 1, and the hot-rolled sheet annealing process, a soaking temperature is controlled to be within a range of 850 to 1100°C, a soaking time is controlled to be within a range of 30 to 300 seconds, and a heating rate (HR,°C/s) from 600°C to a soaking zone temperature during elevating temperature and a cooling rate (CR,°C/s) after the soaking to 600°C are controlled to satisfy the following Relationship 2.

That is, a non-oriented electrical steel sheet of the present disclosure may be manufactured by performing a steel slab formed as described above through usual reheating, hot-rolling, hot-rolled sheet annealing, pickling, cold-rolling, and cold-rolled sheet annealing, and in this case, the cold-rolling may be performed once or twice or more with intermediate annealing therebetween. Description of manufacturing conditions below may be a representative implementation, and does not necessarily apply only to conditions below.

A steel slab may be reheated to 1200°C or lower and then hot-roll the same. When a reheating temperature is 1200°C or higher, a precipitate such as a nitride, a carbide, a sulfide, or the like, present in the slab, may be redissolved and then finely precipitated during hot-rolling and annealing, which may inhibit grain growth and may reduce magnetism.

After the hot-rolling, the hot-rolled sheet may be coiled at 700°C or lower, and may be cooled in the air. The coiled and cooled hot-rolled sheet may be subjected to hot-rolled sheet annealing to secure a recrystallized structure before cold-rolling. A hot-rolled sheet annealing conditions may be a very important process for improving a texture of non-oriented electrical steel sheets, and may be also a very important process for controlling distribution of precipitates. In the non-oriented electrical steel sheets, as precipitates increase, magnetism may deteriorate, and the finer the precipitates are, the more deteriorated the magnetism is. In addition, as an amount of alloy to be added to reduce iron loss increases, a precipitation temperature and distribution of precipitates may be also changed, so the hot-rolled sheet annealing conditions should be controlled according to the composition. Therefore, the precipitates should be controlled in the hot-rolled sheet annealing process, which may be the last heat treatment process that may control distribution of precipitates before the final-annealing.

The inventors of the present disclosure have conducted various studies thereon, and have confirmed that by controlling a holding time at a soaking temperature in the hot-rolled sheet annealing process, a heating rate from 600°C to the soaking temperature, and a cooling rate after a soaking heat treatment to 600°C according to a component amount, to coarsely control distribution of precipitates, deterioration of magnetism may be suppressed to the greatest extent and excellent magnetism may be secured.

In this case, the holding time at the soaking temperature in the hot-rolled sheet annealing process should be 30 seconds or longer such that the precipitates may be formed coarsely, and when it is less than 30 seconds, the precipitates may be formed finely. When the holding time is too long, grains become too coarse and cold-rolling properties may be inferior, so it may be determined that it may be desirable to set it to 300 seconds or less.

A soaking temperature in a hot-rolled sheet annealing process may be in a range of 850 to 1100°C. When the hot-rolled sheet annealing temperature is lower than 850°C, grain growth may be insufficient, resulting in inferior texture and uncontrolled distribution of precipitates. When it exceeds 1100°C, grain growth becomes coarser, resulting in inferior cold-rollability, and precipitates may be finely precipitated, which may deteriorate magnetism.

In the hot-rolled sheet annealing process, when a sum of a heating rate (HR,°C/s) from 600°C to a soaking temperature and a cooling rate (CR,°C/s) after the soaking to 600°C are too fast, precipitates may be finely formed, and conversely, when it is too slow, a texture may be inferior, so it is necessary to manage it within an appropriate range, and the appropriate range should be controlled according to a component. As a component amount changes, conditions should be controlled by reflecting behavior of the precipitates, and a range for securing optimal magnetism may be expressed in the following Relationship 2:

[Relationship 2]

$$1.0 \leq (HR+CR)/1000\{([Al]+[Mn])*([N]+[S])\} \leq 10.0$$

Where [Al], [Mn], [N], and [S] are addition amounts (wt%) of Al, Mn, N, and S, respectively.

the heating rate from 600°C to the soaking temperature and the cooling rate after the soaking heat treatment to 600°C may be controlled in a range of 5°C/s to 100°C/s to secure a uniform microstructure and a texture.

Next, in the present disclosure, the annealed hot-rolled sheet may be pickled by a conventional method and then cold-rolled.

The cold-rolling may be finally rolled to a thickness of 0.10 mm to 0.30 mm. A thickness of the final product may greatly influence iron loss, and since the influence may be considerably large on high-frequency iron loss, it should be 0.3 mmt or less to secure excellent high-frequency iron loss. The above cold-rolling may be performed as one cold-rolling as necessary, or as two cold-rollings with intermediate annealing therebetween. In either case, a final reduction ratio should be in a range of 50 to 95% to secure excellent magnetism through appropriate texture controlling.

The cold-rolled steel sheet may be finally subjected to cold-rolled sheet annealing. In a process of annealing the cold-rolled sheet, an annealing temperature is not particularly limited as long as it is a temperature that may be usually applied to non-oriented electrical steel sheets.

Iron loss of the non-oriented electrical steel sheets may be closely related to a grain size. The iron loss of the non-oriented electrical steel sheets may be divided into hysteresis loss and eddy current loss. The hysteresis loss may decrease as the grain size increases, while the eddy current loss may increase as the grain size increases. Therefore, there may be an optimal grain size at which a sum of the hysteresis loss and the eddy current loss is minimized. Therefore, it may be important to derive and apply an annealing temperature that may secure an optimal grain size, and the annealing temperature may be 850 to 1100°C. When the annealing temperature is lower than 850°C, the crystal grains may be too fine, which increases the hysteresis loss. When it exceeds 1100°C, the crystal grains may be too coarse, which increases the eddy current loss, which may result in poor iron loss.

The final-annealed sheet may be shipped to a customer after being treated with an insulating film. The insulating film may be treated with an organic film, an inorganic film, or an organic-inorganic composite film, and it is also possible to treat the same with other insulating film agents. The customer may use the steel sheet as it is after processing.

A non-oriented electrical steel sheet of the present disclosure manufactured through the composition and manufacturing process described above may exhibit precipitate distribution satisfying the following Relationship 3, thereby providing excellent high-frequency iron loss characteristics with a resistivity ($\rho$) of 63 $\mu\Omega$cm or higher at room temperature, iron loss (W10/400) of 12.0 W/Kg or less after the final-annealing, and a magnetic flux density (B50) of 1.60 T or more.

Ratio of Number of Sulfides and Nitrides having a size of 0.2 $\mu$m or more among Precipitates having a size of 0 to 0.5 $\mu$m in Microstructure of Steel $\geq$ 10%  [Relationship 3]

Mode for Invention

Hereinafter, a method for manufacturing a non-oriented electrical steel sheet according to the present disclosure will be described in detail through examples. However, the following examples are merely illustrative of the present disclosure, and contents of the present disclosure may not be limited by the following examples.

(Example)

A steel ingot having a composition as illustrated in Table 1 below was manufactured through vacuum melting. Each of the above-mentioned manufactured ingots was heated at 1180°C and hot-rolled to a thickness of 2.1 mm, and then coiled and cooled in the air. Thereafter, the cooled hot-rolled sheet were subjected to hot-rolled sheet annealing under conditions illustrated in Table 2 below. Specifically, not only a heat treatment time at a soaking temperature during hot-rolled sheet annealing, but also a heating rate (HR,°C/s) from 600°C to a soaking zone temperature and a cooling rate (CR,°C/s) after the soaking to 600°C were varied according to amounts of the steel sheet components Si, Al, Mn, N, and S, such that distribution of precipitates formed and influence thereof on magnetism could be analyzed. Then, the hot-rolled sheet annealed was pickled, cold-rolled to a thickness of 0.2 mm, and then finally cold-rolled at a temperature in a range of 900 to 1050°C.

As described above, room temperature resistivity of each of the manufactured specimens was measured, and results therefrom were illustrated in Table 2 below. In addition, TEM replica specimens were manufactured to observe and analyze the distribution of precipitates such as sulfides and nitrides in the specimen structure, and results according to Relationships 3 and 4 were illustrated in Table 2 below.

In addition, after processing the magnetic measurement specimens, iron loss W10/400 and magnetic flux density B50 were measured, and results therefrom were also illustrated in Table 2 below. Meanwhile, in this experiment, the iron loss W10/400 represents an average loss (W/Kg) in a rolling direction and a direction, perpendicular to the rolling, when a magnetic flux density of 1.0 Tesla is induced at a frequency of 400 Hz, and the magnetic flux density B50 represents a magnitude (Tesla) of the magnetic flux density induced, when a magnetic field of 5000 A/m is applied.

**EP 4 640 875 A1**

[Table 1]

| Steel Type | Composition (wt%) | | | | | | | | Relationship 1 |
|---|---|---|---|---|---|---|---|---|---|
| | C | Si | Mn | P | S | Al | Ti | N | |
| 1 | 0.0028 | 2.98 | 0.40 | 0.009 | 0.0038 | 1.79 | 0.0036 | 0.0022 | 0.73 |
| 2 | 0.0024 | 3.51 | 1.30 | 0.002 | 0.0026 | 2.07 | 0.0015 | 0.0010 | 0.96 |
| 3 | 0.0023 | 3.20 | 1.50 | 0.009 | 0.0018 | 1.19 | 0.0012 | 0.0029 | 0.84 |
| 4 | 0.0018 | 3.06 | 1.27 | 0.005 | 0.0017 | 1.47 | 0.0018 | 0.0015 | 0.90 |
| 5 | 0.0028 | 3.73 | 0.77 | 0.009 | 0.0017 | 1.49 | 0.0006 | 0.0027 | 0.61 |
| 6 | 0.0028 | 4.04 | 2.00 | 0.012 | 0.0026 | 0.78 | 0.0017 | 0.0018 | 0.69 |
| 7 | 0.0030 | 3.39 | 0.70 | 0.007 | 0.0025 | 1.52 | 0.0018 | 0.0021 | 0.65 |
| 8 | 0.0006 | 3.05 | 0.58 | 0.003 | 0.0011 | 1.42 | 0.0023 | 0.0025 | 0.66 |
| 9 | 0.0024 | 3.95 | 1.55 | 0.009 | 0.0017 | 1.52 | 0.0014 | 0.0015 | 0.78 |
| 10 | 0.0021 | 3.81 | 2.22 | 0.009 | 0.0013 | 1.07 | 0.0014 | 0.0017 | 0.86 |
| 11 | 0.0017 | 3.01 | 1.95 | 0.005 | 0.0012 | 0.60 | 0.0006 | 0.0015 | 0.85 |
| 12 | 0.0006 | 3.60 | 1.13 | 0.005 | 0.0012 | 1.79 | 0.0017 | 0.0030 | 0.81 |
| 13 | 0.0010 | 3.15 | 1.38 | 0.006 | 0.0025 | 1.66 | 0.0018 | 0.0028 | 0.97 |
| 14 | 0.0030 | 2.90 | 1.21 | 0.006 | 0.0030 | 1.57 | 0.0022 | 0.0024 | 0.96 |
| 15 | 0.0025 | 3.16 | 1.56 | 0.010 | 0.0027 | 1.24 | 0.0030 | 0.0010 | 0.89 |
| 16 | 0.0022 | 3.78 | 2.97 | 0.005 | 0.0026 | 0.90 | 0.0005 | 0.0014 | 1.02 |
| 17 | 0.0016 | 2.85 | 0.05 | 0.003 | 0.0015 | 2.92 | 0.0010 | 0.0022 | 1.04 |
| 18 | 0.0016 | 3.19 | 1.20 | 0.004 | 0.0028 | 0.43 | 0.0006 | 0.0030 | 0.51 |
| 19 | 0.0022 | 3.82 | 2.51 | 0.007 | 0.0017 | 0.45 | 0.0024 | 0.0006 | 0.77 |
| 20 | 0.0020 | 3.72 | 2.91 | 0.007 | 0.0023 | 0.98 | 0.0021 | 0.0041 | 1.05 |
| 21 | 0.0018 | 3.64 | 0.43 | 0.011 | 0.0012 | 1.57 | 0.0024 | 0.0018 | 0.55 |
| 22 | 0.0009 | 3.36 | 1.70 | 0.004 | 0.0040 | 2.28 | 0.0016 | 0.0042 | 1.18 |
| 23 | 0.0012 | 3.55 | 1.35 | 0.004 | 0.0030 | 2.15 | 0.0022 | 0.0018 | 0.99 |
| 24 | 0.0022 | 3.80 | 1.54 | 0.007 | 0.0048 | 1.19 | 0.0010 | 0.0035 | 0.72 |
| 25 | 0.0016 | 3.23 | 0.76 | 0.009 | 0.0018 | 0.76 | 0.0015 | 0.0009 | 0.47 |
| 26 | 0.0009 | 3.20 | 1.32 | 0.004 | 0.0032 | 1.07 | 0.0022 | 0.0021 | 0.75 |
| 27 | 0.0020 | 2.91 | 0.94 | 0.003 | 0.0014 | 1.06 | 0.0020 | 0.0014 | 0.69 |
| 28 | 0.0025 | 3.67 | 1.32 | 0.003 | 0.0024 | 2.15 | 0.0005 | 0.0045 | 0.95 |
| 29 | 0.0022 | 3.21 | 0.42 | 0.011 | 0.0027 | 1.21 | 0.0015 | 0.0024 | 0.51 |
| 30 | 0.0013 | 2.63 | 1.98 | 0.003 | 0.0011 | 0.68 | 0.0021 | 0.0009 | 1.01 |

* In Table 1, residual components were Fe and inevitable impurities, and Relationship 1 is ([Al]+[Mn])/[Si].

[Table 2]

| Steel Type | Hot-Rolled Annealing Conditions | | | | | Relationship 3 | Relationship 4 | Resistivity(μΩ cm) | W10/400 (W/kg) | B50(T) | Example |
|---|---|---|---|---|---|---|---|---|---|---|---|
| | Soaking Temp. ( °C) | Soaking Time (sec) | Heating Rate (HR,°C/ s) | Cooling Rate (CR,°C/ s) | Relationship 2 | | | | | | |
| 1 | 870 | 105 | 19 | 16 | 2.7 | 11 | 133 | 69.4 | 10.3 | 1.64 | Inventive |
| 2 | 1090 | 40 | 33 | 15 | 4.0 | 10 | 185 | 83.6 | 8.6 | 1.62 | Inventive |
| 3 | 1010 | 227 | 45 | 36 | 6.3 | 15 | 123 | 71.3 | 9.6 | 1.63 | Inventive |
| 4 | 1090 | 185 | 31 | 32 | 7.2 | 11 | 156 | 71.6 | 10.1 | 1.63 | Inventive |
| 5 | 920 | 68 | 27 | 14 | 4.1 | 13 | 109 | 76.6 | 9.4 | 1.62 | Inventive |
| 6 | 1070 | 70 | 23 | 27 | 4.1 | 17 | 111 | 79.0 | 9.2 | 1.62 | Inventive |
| 7 | 1080 | 206 | 48 | 39 | 8.5 | 17 | 129 | 72.7 | 9.5 | 1.63 | Inventive |
| 8 | 1040 | 64 | 5 | 12 | 2.4 | 16 | 145 | 67.0 | 10.5 | 1.64 | Inventive |
| 9 | 1050 | 118 | 26 | 44 | 7.1 | 13 | 122 | 83.8 | 8.6 | 1.62 | Inventive |
| 10 | 1030 | 138 | 15 | 43 | 5.9 | 20 | 159 | 80.9 | 8.5 | 1.62 | Inventive |
| 11 | 1080 | 165 | 25 | 24 | 7.1 | 17 | 127 | 65.1 | 10.1 | 1.64 | Inventive |
| 12 | 1000 | 96 | 13 | 25 | 3.1 | 18 | 190 | 80.5 | 8.6 | 1.62 | Inventive |
| 13 | 920 | 45 | 9 | 20 | 1.8 | 14 | 103 | 75.4 | 9. 4 | 1.63 | Inventive |
| 14 | 880 | 121 | 21 | 30 | 3.4 | 17 | 148 | 70.6 | 9.8 | 1.64 | Inventive |
| 15 | 1040 | 106 | 26 | 7 | 3.2 | 19 | 193 | 71.8 | 9.6 | 1.63 | Inventive |
| 16 | 1010 | 60 | 18 | 8 | 1.7 | 14 | 83 | 82.9 | 12.7 | 1.58 | Comparative |
| 17 | 920 | 181 | 22 | 25 | 4.3 | 7 | 145 | 78.7 | 13.5 | 1.59 | Comparative |
| 18 | 930 | 22 | 15 | 39 | 5.6 | 9 | 91 | 60.9 | 12.0 | 1.59 | Comparative |
| 19 | 1000 | 132 | 48 | 26 | 10.9 | 8 | 126 | 75.7 | 12.7 | 1.58 | Comparative |
| 20 | 1040 | 102 | 13 | 9 | 0.9 | 9 | 2 | 82.8 | 13.5 | 1.58 | Comparative |
| 21 | 890 | 142 | 57 | 30 | 14.5 | 6 | 95 | 74.6 | 12.3 | 1.59 | Comparative |
| 22 | 940 | 345 | 19 | 12 | 0.9 | 9 | 84 | 86.6 | 12.5 | 1.57 | Comparative |
| 23 | 1020 | 311 | 44 | 48 | 5.4 | 14 | 92 | 85.3 | 12.5 | 1.57 | Comparative |
| 24 | 1030 | 27 | 8 | 12 | 0.9 | 8 | 98 | 78.3 | 1.2 | 1.58 | Comparative |
| 25 | 940 | 22 | 12 | 58 | 16.4 | 8 | 93 | 62.6 | 12.6 | 1.59 | Comparative |

EP 4 640 875 A1

11

| Steel Type | Hot-Rolled Annealing Conditions | | | | | Relationship 3 | Relationship 4 | Resistivity($\mu\Omega$ cm) | W10/400 (W/kg) | B50(T) | Example |
| | Soaking Temp. ( °C) | Soaking Time (sec) | Heating Rate (HR,°C/ s) | Cooling Rate (CR,°C/ s) | Relationship 2 | | | | | | |
|---|---|---|---|---|---|---|---|---|---|---|---|
| 26 | 1070 | 164 | 5 | 6 | 0.9 | 9 | 83 | 69.0 | 10.5 | 1.58 | Comparative |
| 27 | 1040 | 178 | 37 | 39 | 13.6 | 7 | 132 | 63.4 | 12.3 | 1.58 | Comparative |
| 28 | 1070 | 132 | 7 | 12 | 0.8 | 12 | 90 | 86.5 | 12.9 | 1.57 | Comparative |
| 29 | 1030 | 304 | 55 | 60 | 13.8 | 8 | 79 | 65.6 | 12.9 | 1.58 | Comparative |
| 30 | 930 | 21 | 46 | 35 | 15.2 | 17 | 69 | 61.8 | 13.7 | 1.59 | Comparative |

* In Table 2, Relationship 2 may be (HR+CR)/10001([Al]+[Mn])*([N]+[S])}, and the heating rate (HR) may be a heating rate from 600°C to the soaking zone temperature, and the cooling rate (CR) may be a cooling rate to 600°C after the soaking heat treatment.

Relationship 3 may be a ratio (%) of the number of sulfides and nitrides having a size of 0.2 μm or more among precipitates having a size of 0 to 0.5 μm in a microstructure of steel, and Relationship 4 may be the number of nitrides of 0.5 μm or more in a microstructure of steel.

As illustrated in Tables 1 and 2 above, steels No. 1 to 15 (Inventive Examples) that satisfy electrical steel sheet composition and manufacturing process conditions of the present disclosure had satisfied all in which a ratio of the number of sulfides and nitrides having a size of 0.2 μm or more among precipitates of 0 to 0.5 μm in size, according to Relationship 3, was 10% or more, and the number of nitrides of 0.5 μm or more according to Relationship 4 was 100/mm$^2$, such that the iron loss (W10/400) after final-annealing was 12.0 W/Kg or less and the magnetic flux density (B50) was 1.60 T or more, showing excellent magnetism. In addition, resistivity at room temperature was 63 μΩcm or higher.

In contrast, steel No. 16 did not satisfy the scope of the present disclosure in terms of an Mn addition amount and Relationship 1, and therefore, the number of nitrides of 0.5 μm or more in Relationship 4 was less than 100/mm$^2$, resulting in poor iron loss W10/400 and magnetic flux density B50.

In addition, steel No. 17 did not satisfy the scope of the present disclosure in terms of an Mn addition amount and an Al addition amount and Relationship 1, and therefore, a ratio of the number of sulfides and nitrides having a size of 0.2 μm or more, among precipitates of 0 to 0.5 μm in size in Relationship 3, was less than 10%, resulting in poor iron loss W10/400 and magnetic flux density B50.

In addition, steel No. 18 not only was outside the scope of the present disclosure in terms of an Al addition amount and Relationship 1, but also had a heat treatment time at a soaking temperature during hot-rolled sheet annealing that was too short. Therefore, it did not satisfy requirements of Relationships 3 and 4, and showed inferior iron loss W10/400 and magnetic flux density B50. In addition, resistivity (ρ) at room temperature did not satisfy 63 μΩcm or higher.

In addition, steel No. 19 did not satisfy requirements of an Mn addition amount and an Al addition amount and Relationship 2 during hot-rolled sheet annealing, and showed inferior iron loss W10/400 and magnetic flux density B50.

In addition, steel No. 20 not only did not satisfy an Mn addition amount and an Al addition amount and Relationship 1, but also did not satisfy requirements of Relationship 2 during hot-rolled plate annealing. In other words, a ratio of the number of sulfides and nitrides having a size of 0.2 μm or more, among precipitates of 0 to 0.5 μm in size in Relationship 3, was less than 10%, and the number of nitrides of 0.5 μm or more in Relationship 4 was less than 100/mm$^2$, showing poor iron loss W10/400 and magnetic flux density B50.

Steel Nos. 21 and 22 did not satisfy Relationship 1 for Si, Mn, and Al, and furthermore, during hot-rolled sheet annealing, Relationship 2 was not satisfied, so a ratio of the number of sulfides and nitrides having a size of 0.2 μm or more, among precipitates having a size of 0 to 0.5 μm in Relationship 3, was less than 10%, and the number of nitrides of 0.5 μm or more in Relationship 4 was less than 100/mm$^2$, showing in poor iron loss W10/400 and magnetic flux density B50.

Steel No. 23 satisfied the composition and component of Relationship 1, but did not satisfy the heat treatment time at the soaking temperature during APL annealing, resulting in poor iron loss W10/400 and magnetic flux density B50, as the number of nitrides of 0.5 μm or more in Relationship 4 was less than 100/mm$^2$.

Steel No. 24, like Steel No. 23, satisfied the composition and component of Relationship 1, but did not satisfy requirements of Relationship 2 as well as a heat treatment time at a soaking temperature during APL annealing. A ratio of the number of sulfides and nitrides having a size of 0.2 μm or more, among precipitates of 0 to 0.5 μm in size in Relationship 3, was less than 10%, and the number of nitrides of 0.5 μm or more in Relationship 4 was less than 100/mm$^2$, showing inferior iron loss W10/400 and magnetic flux density B50.

Steel No. 25 has Si, Mn, and Al amounts within the scope of the present disclosure, but does not satisfy requirements of Relationships 1 and 2. A ratio of the number of sulfides and nitrides having a size of 0.2 μm or more, among precipitates of 0 to 0.5 μm in size in Relationship 3, less than 10%, and the number of nitrides of 0.5 μm or more in Relationship 5 was less than 100/mm$^2$, resulting in poor iron loss W10/400 and magnetic flux density B50. In addition, it did not satisfy a condition that resistivity (ρ) at room temperature was 63 μΩcm or higher.

Steels No. 26, 27, and 28 satisfied a soaking time and the like during hot-rolled sheet annealing, but did not satisfy requirements of Relationship 2. A ratio of the number of sulfides and nitrides having a size of 0.2 μm or more, among precipitates of 0 to 0.5 μm in size in Relationship 3, was less than 10%, or the number of nitrides of 0.5 μm or more in Relationship 4 was less than 100/mm$^2$, showing poor iron loss W10/400 and magnetic flux density B50.

In steel No. 29, not only did Si, Mn, and Al fail to satisfy Relationship 1, but also did not satisfy a soaking time condition of 30 to 300 seconds during hot-rolled sheet annealing and requirements of Relationship 2. In addition, a ratio of the number of sulfides and nitrides having a size of 0.2 μm or more, among precipitates having a size of 0.5 μm in Relationship 3, was less than 10%, and the number of nitrides of 0.5 μm or more in Relationship 4 was less than 100/mm$^2$, resulting in poor iron loss W10/400 and magnetic flux density B50.

Steel No. 30 did not satisfy a soaking time condition of 30 to 300 seconds and requirements of Relationship 2 during hot-rolled sheet annealing, as well as Si, Mn, and Al did not satisfy Relationship 1. In addition, the number of nitrides of 0.5 μm or more in Relationship 4 was less than 100/mm$^2$, resulting in poor iron loss W10/400 and magnetic flux density B50. In addition, it did not satisfy a condition that resistivity (ρ) at room temperature was 63 μΩcm or higher.

Although the description has been made with reference to embodiments, it can be to be understood that those skilled in the art may modify and change the present disclosure in various manners within the scope of the basic idea of the present disclosure, and that the scope of the rights of the present disclosure should be interpreted based on the scope of the claims.

**Claims**

1.  A non-oriented electrical steel sheet comprising:

    by weight, C: 0.005% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, a balance of Fe, and inevitable impurities,
    wherein Al, Si, and Mn satisfy the following Relationship 1, and a microstructure of the steel sheet exhibits precipitation distribution satisfying the following Relationship 3:

    $$[Relationship\ 1]$$

    $$0.60 \leq ([Al]+[Mn])/[Si] \leq 1.0$$

    where [Al], [Mn], and [Si] are addition amounts (wt%) of Al, Mn, and Si, respectively,

    Ratio of Number of Sulfides and Nitrides having a size of 0.2 $\mu$m or more among Precipitates having a size of 0 to 0.5 $\mu$m in Microstructure of Steel $\geq$ 10%.    [Relationship 3]

2.  The non-oriented electrical steel sheet of claim 1, wherein the microstructure of the steel sheet satisfies the following Relationship 4:

    Number of Nitrides of 0.5 $\mu$m or more in Microstructure of Steel $\geq$ 100/mm$^2$.    [Relationship 4]

3.  The non-oriented electrical steel sheet of claim 1, having a resistivity ($\rho$) of 63 $\mu\Omega$cm or higher at room temperature.

4.  The non-oriented electrical steel sheet of claim 1, wherein iron loss (W10/400) is 12.0 W/Kg or less and magnetic flux density (B50) is 1.60 T or more, if the iron loss W10/40 is an average loss (W/Kg) in a rolling direction and a direction, perpendicular to the rolling direction, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.

5.  The non-oriented electrical steel sheet of claim 1, further including one or more of Sn and Sb in a range of 0.2% or less.

6.  The non-oriented electrical steel sheet of claim 1, further including one or more of Cu and Ni in a range of 0.05% or less.

7.  The non-oriented electrical steel sheet of claim 1, further including Cr in a range of 0.1% or less.

8.  The non-oriented electrical steel sheet of claim 1, further including one or more of Zr, Mo, and V in a range of 0.01% or less.

9.  A method for manufacturing a non-oriented electrical steel sheet, comprising:

    reheating a slab containing, by weight, **C:** 0.005% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, a balance of Fe, and inevitable impurities,
    hot-rolling the reheated slab to manufacture a hot-rolled steel sheet;
    cold-rolling and then annealing the hot-rolled steel sheet, or annealing the hot-rolled steel sheet without cold-rolling;

pickling and then air-cooling the annealed hot-rolled steel sheet; and

cold-rolling the air-cooled hot-rolled steel sheet; and

final-annealing the cold-rolled steel sheet,

wherein Al, Si, and Mn satisfy the following Relationship 1,

during the hot-rolled sheet annealing process, a soaking temperature is controlled to be within a range of 850 to 1100°C, a soaking time is controlled to be within a range of 30 to 300 seconds, and a heating rate (HR,°C/s) from 600°C to a soaking zone temperature during the heating and a cooling rate (CR,°C/s) after the soaking to 600°C are controlled to satisfy the following Relationship 2:

[Relationship 1]

$$0.60 \leq ([Al]+[Mn])/[Si] \leq 1.00$$

where [Al], [Mn], and [Si] are addition amounts (wt%) of Al, Mn, and Si, respectively

[Relationship 2]

$$1.0 \leq (HR+CR)/1000\{([Al]+[Mn])*([N]+[S])\} \leq 10.0$$

where [Al], [Mn], [N], and [S] are addition amounts (wt%) of Al, Mn, N, and S, respectively.

10. The method of claim 9, wherein the heating rate (HR) and the cooling rate (CR) are 5 to 100°C/s, respectively.

11. The method of claim 9, wherein the final-annealed electrical steel sheet exhibits precipitation distribution satisfying Relationships 3 and 4 in a microstructure of the steel sheet, has a resistivity ($\rho$) of 63 $\mu\Omega$cm or higher at room temperature, iron loss (W10/400) of 12.0 W/Kg or less after the final-annealing, and a magnetic flux density (B50) of 1.60 T or more:

Ratio of Number of Sulfides and Nitrides having a size of 0.2 $\mu$m or more among Precipitates having a size of 0 to 0.5 $\mu$m in Microstructure of Steel $\geq$ 10%     [Relationship 3]

Number of Nitrides of 0.5 $\mu$m or more in Microstructure of Steel $\geq$ 100/mm$^2$     [Relationship 4]

## INTERNATIONAL SEARCH REPORT

| International application No. |
| --- |
| **PCT/KR2023/019137** |

| A. | CLASSIFICATION OF SUBJECT MATTER |
| --- | --- |

**C22C 38/02**(2006.01)i; **C22C 38/04**(2006.01)i; **C22C 38/06**(2006.01)i; **C22C 38/00**(2006.01)i; **C22C 38/14**(2006.01)i; **C22C 38/34**(2006.01)i; **C22C 38/38**(2006.01)i; **C21D 8/12**(2006.01)i

According to International Patent Classification (IPC) or to both national classification and IPC

| B. | FIELDS SEARCHED |
| --- | --- |

Minimum documentation searched (classification system followed by classification symbols)

C22C 38/02(2006.01); C21D 8/12(2006.01); C22C 38/00(2006.01); C22C 38/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기(전자)강판(non-oriented electrical(electromagnetic) steel), 실리콘 (Si), 알루미늄(Al), 망간(Mn), 소둔(annealing), 승온(heating), 냉각(cooling), 속도(velocity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2006-213975 A (NIPPON STEEL CORP.) 17 August 2006 (2006-08-17)<br>See paragraph [0014] and claims 1-2 and 5. | 1-11 |
| Y | KR 10-2016-0078134 A (POSCO) 04 July 2016 (2016-07-04)<br>See paragraph [0014] and claims 1 and 5-6. | 1-11 |
| A | KR 10-2016-0075262 A (POSCO) 29 June 2016 (2016-06-29)<br>See claims 1 and 5-6. | 1-11 |
| A | KR 10-1993202 B1 (JFE STEEL CORPORATION) 26 June 2019 (2019-06-26)<br>See claim 1. | 1-11 |
| A | KR 10-1999-0042318 A (POHANG IRON & STEEL CO., LTD.) 15 June 1999 (1999-06-15)<br>See claim 1. | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 February 2024** | **27 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/019137**

| Patent document cited in search report | | | Publication date (day/month/year) | Patent family member(s) | | | Publication date (day/month/year) |
|---|---|---|---|---|---|---|---|
| JP | 2006-213975 | A | 17 August 2006 | JP | 4589747 | B2 | 01 December 2010 |
| KR | 10-2016-0078134 | A | 04 July 2016 | None | | | |
| KR | 10-2016-0075262 | A | 29 June 2016 | KR | 10-1671692 | B1 | 02 November 2016 |
| KR | 10-1993202 | B1 | 26 June 2019 | CN | 104520450 | A | 15 April 2015 |
| | | | | CN | 104520450 | B | 14 December 2016 |
| | | | | EP | 2886667 | A1 | 24 June 2015 |
| | | | | EP | 2886667 | B1 | 05 October 2016 |
| | | | | IN | 289DEN2015 | A | 12 June 2015 |
| | | | | JP | 2014-037581 | A | 27 February 2014 |
| | | | | JP | 6127408 | B2 | 17 May 2017 |
| | | | | KR | 10-2015-0032581 | A | 26 March 2015 |
| | | | | RU | 2593243 | C1 | 10 August 2016 |
| | | | | TW | 201408789 | A | 01 March 2014 |
| | | | | TW | I484046 | B | 11 May 2015 |
| | | | | US | 2015-0136278 | A1 | 21 May 2015 |
| | | | | US | 9748027 | B2 | 29 August 2017 |
| | | | | WO | 2014-027452 | A1 | 20 February 2014 |
| KR | 10-1999-0042318 | A | 15 June 1999 | KR | 10-0340548 | B1 | 18 July 2002 |

Form PCT/ISA/210 (patent family annex) (July 2022)

**EP 4 640 875 A1**

**Patent documents cited in the description**

- JP 2009102739 A
- JP 2016199787 A
- JP 2006265720 A
- JP 2008050686 A
- KR 20010100866